(19) Europäisches Patentamt
European Patent Office
Office européen des brevets

(11) EP 3 900 886 A1

(12) EUROPEAN PATENT APPLICATION

(43) Date of publication:
27.10.2021 Bulletin 2021/43

(51) Int Cl.:
B25J 9/16 (2006.01)
B26F 3/12 (2006.01)
B26D 3/00 (2006.01)
G05B 19/4099 (2006.01)
B26D 1/547 (2006.01)
B26D 5/00 (2006.01)

(21) Application number: 20170645.4

(22) Date of filing: 21.04.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: ETH Zurich
8092 Zurich (CH)

(72) Inventors:
• PORANNE, Roi
  8050 Zürich (CH)
• COROS, Stelian
  8057 Zürich (CH)
• DÜNSER, Simon
  8057 Zürich (CH)
• THOMASZEWSKI, Bernhard
  8053 Zürich (CH)

(54) METHOD AND SYSTEM FOR SUBTRACTIVE MANUFACTURING OF OBJECTS

(57) The invention relates to a method for manufacturing objects from a block of material (50) using a cutting element (20) attached to a robotic system (100), the robotic system (100) being configured to move and to control the cutting element (20), the method comprising the steps of: providing the target shape (40) of an object; calculating a set of data corresponding to a sequence of movements of the robotic system for configuring the cutting element (20); sequentially positioning the robotic system according to the set of data thereby sweeping the cutting element (20) creating a tool surface (30), and cutting the block of material (50); wherein the step of calculating the set of data comprises: formulating at least one objective function which describes the overall goal for the tool surface (30) to conform with the surface of the target shape, and applying an optimization algorithm to minimize the objective function. There is further provided a corresponding robotic system (100) for manufacturing of objects from the block of material.

Fig.1

EP 3 900 886 A1

**Description**

Field of the invention

The present invention relates to a method and system for robotic manufacturing of objects out of block of material using a cutting element.

Background

Robotic manufacturing is widely used in industrial and creative environments. Contemporary architecture and design are challenging traditional construction methods. Using molds for the realization of complex concrete structures or curvatures is state of the art for the construction of modern buildings. One common example of subtractive robotic manufacturing is hot-wire cutting. Hot-wire cutters can be easily mounted on robotic platforms, and together with milling tools, they are routinely employed in machine shops. For example, manufacturing curved concrete structures may rely on robotic hot-wire cutting systems for hot-wire cutting of molds made of polystyrene. These robotic systems are cutting out a predefined shape of the material following a calculated path and sequence of cuts.

Traditionally, a tensioned wire is used for the cutting, which relies on the cutting tool having a straight configuration. The straight configuration of the cutting tool however limits the number of cuttable shapes. For example, surfaces with cavities, i.e. bowl-like surfaces cannot be cut at all. Alternatively, permanently deformed metal rods, being self-supporting, can be shaped to match the desired shape for the cut. For complex structures this might be a disadvantage, as the tool must be changed several times to realize the complex structure, if the cut at all is feasible.

Further developments in hot-wire cutting technology lead to self-supporting but elastically deformable rods or blades as a cutting tool, which are manipulated from both ends to reversibly bend the tool into a desired shape. This allows not only a wider range of shapes which can be cut with this method, but also a reduction of the number of cuts required to realize a general target shape.

However, the prior art techniques have been limited to deformations of the cutting tool in a two-dimensional plane which therefore does not fully exploit the capabilities of elastically deformable tools. For example, EP3429810A1 describes a method and a system for manufacturing a mold for creation of complex objects, such as concrete objects, by deforming and moving a deformable cutting blade or rod through controlled movements of the first and the second end effector of a robotic system to which respective end portions of the deformable cutting blade are connected.

However, the solution according to this prior art divides a target surface into several segments. Each of the segments is represented by a sequence of planar curves. For each planar curve an elastic curve is calculated that approximates the said original curve. The cutting tool is deformed according to the elastic curve. This method requires a larger number of cuts, and segmentation of the fabricated object into smaller parts according to the surface segmentation. Calculation and realization, if at all feasible, of complex shapes may be cumbersome.

An aim of the present invention is therefore to provide a method and a system which mitigate at least some of the above-mentioned disadvantages.

Brief Summary

According to the present invention there is provided a method for manufacturing objects from a block of material using a cutting element attached to a robotic system, the robotic system being configured to move and to control the cutting element, the method comprising the steps of:

- providing a target shape of an object;
- calculating a set of data corresponding to a sequence of movements of the robotic system for configuring the cutting element;
- sequentially positioning the robotic system according to the set of data thereby sweeping the cutting element creating a tool surface, and cutting the block of material;

wherein the step of calculating the set of data comprises:

- formulating at least one objective function which describes the overall goal for the tool surface to conform with a surface of the target shape, and
- applying an optimization algorithm to minimize the objective function.

In an embodiment the optimization algorithm is a gradient-based algorithm. In one preferred embodiment the gradient-based algorithm is Gauss-Newton method.

In an embodiment the steps of calculating the set of data and sequentially positioning the robotic system are repeated until a predefined tolerance is achieved.

In an embodiment the calculating of the set of data further comprises formulating additional objective functions related to path smoothness and/or collision avoidance and/or workspace constrains.

In an embodiment the method further comprises the step of formulating a differentiable numerical model of the cutting element for computing the rest shape of the cutting element for given boundary conditions.

In an embodiment the method further comprises the step of calculating a kinematic model of the robotic system.

In an embodiment the block of material is made of expanded polystyrene foam.

In an embodiment the cutting element is one of: a wire, a rod, a blade and a strip.

In an embodiment the cutting element is configured to be heated.

In an embodiment the cutting element is elastic and/or flexible.

In an embodiment the cutting of the block of material is user initialized or automatically initialized.

According to a further aspect of the present invention there is provided a system for manufacturing objects from a block of material. The system is comprising at least one robotic arm having an end effector; a cutting element attached to the end effector; and computing means configured to control the robotic arm and execute the steps of the method according to the invention.

In an embodiment the system comprises a support element, wherein one end portion of the cutting element is attached to the support element.

In an embodiment the system comprises the first robotic arm and the second robotic arm having respectively a first end effector and a second end effector, and wherein end portions of the cutting element are attached to the end effectors.

According to a further aspect of the present invention there is provided a computer readable storage medium comprising instructions, which when executed by computer, cause the computer to carry out the steps of the method of the embodiments of the invention.

Brief description of the drawings

The invention will be better understood with the aid of the description of several embodiments given by way of examples and illustrated by the figures, in which:

Fig. 1 shows a perspective view of a robotic system comprising one robotic arm manufacturing an object out of a block of material according to an embodiment;

Fig. 2A shows a perspective view of a robotic system comprising two robotic arms manufacturing an object out of a block of material according to an embodiment;

Fig. 2B shows a perspective view of a robotic system comprising two robotic arms manufacturing an object out of a block of material, which is positioned by a third robotic arm according to an embodiment;

Fig. 3 shows a perspective view of the block of material of Fig. 2A when the object manufacturing is almost completed and a representation of a tool surface;

Fig. 4 shows a tool surface and manufacturing of a bowl-shaped object according to the invention;

Fig. 5 shows a tool surface and the manufacturing of the hart-shaped object according to the invention;

Fig. 6 shows another perspective view of robotic system, the tool surface structure and target object according to the invention;

Fig. 7 shows a point matching process of a targeted shape of the object and the points of the model of the cutting element.

Detailed description

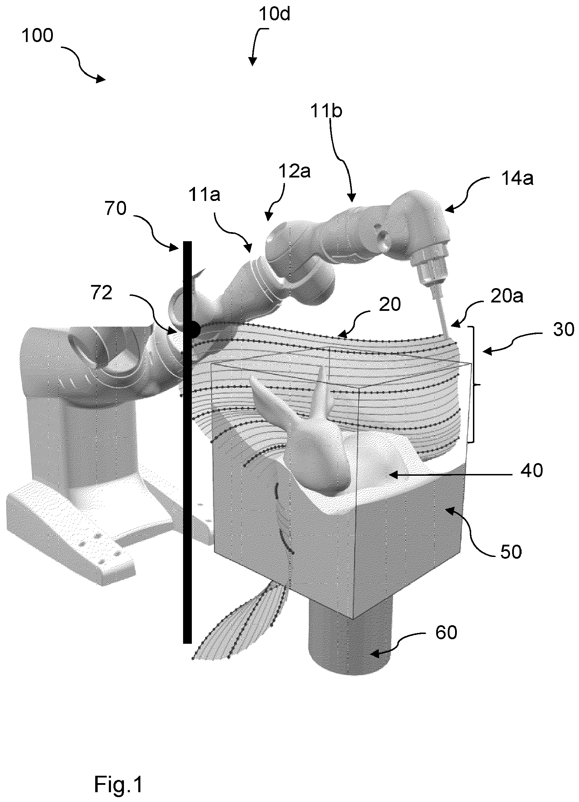

Figure 1 shows the robotic system 100 according to one embodiment of the present invention. The robotic system 100 comprises for example one robotic arm 10 having a first arm 11a and a second arm portion 11b connected through a joint 12 to form a joint angle varying as a function of the movement of the first arm portion 11a relative to the second arm portion 11b. An end effector 14 is connected to the robotic arm 10. The robotic system 100 is configured to move and to control a cutting element 20, which is preferably in the form of one of a wire, a blade, a strip or a rod. In the preferred embodiment, the cutting element 20 is elastic and/or flexible. In one preferred embodiment the cutting element 20 is deformable. The cutting element 20 comprise a first end portion 20a and a second end portion 20b. The first end portion 20a may be attached to a terminal portion of the end effector 14. In the embodiment shown in Figure 1, the second end portion 20b may be attached to an anchoring element 72 which may be fixed or movable. For example, the second end portion 20b of the rod 20 may be attached to a fixed anchoring element 72 which may be part of a wall, a floor, a rod 70, a supporting table or any other suitable attaching structure.

According to this embodiment, the robotic arm 10 is configured to move the first end portion 20a of the cutting element 20 whereas the anchoring element 72 passively keeps the second end portion 20b of the rod 20 attached. Alternatively, the anchoring element 72 may be moved freely. For example, the anchoring element 72 may be operably connected to a rail system along which the anchoring element 72 may move. Alternatively, the anchoring element 72 may be a spring, a bearing or a rail. Any of these alternative anchoring elements would allow passive bending and twisting movements of the cutting element 20. The twisting and/or bending movements of the cutting element 20 are induced as a function of the physical property of the cutting element 20, the movement of the robotic arm 10 and the interdependence between the anchoring element 72 and the cutting element 20, for example the strain force induced by the anchoring element attached to the rod. A supporting element 60 may be provided onto which the block of material 50 is attached. In the embodiment illustrated in Figure 1, the supporting element 60 is a fixed element.

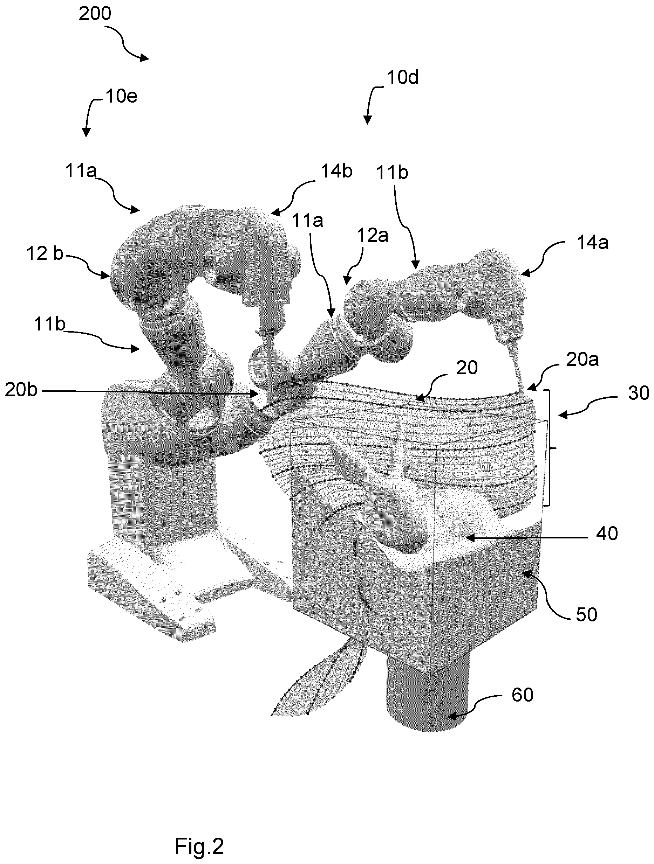

In one embodiment, the supporting element 60 is rotatable and/or movable in further directions. For example, as illustrated in Figure 2B the supporting element 60 may be an additional robotic arm 10c which may support and move the block of material 50. Mounting the workpiece on a robotic arm advantageously eliminates the need to manually re-adjust the placement and orientation of the material before each cut, and it may significantly increase the effective workspace of the robotic system 200. In yet another embodiment, the supporting element 60 comprises a rail system for incremental positioning or a ball-bearing having a degree of freedom of movements in a multitude of directions, whereby the block of material 50 may be moved and secured into a specific position for a 2D or 3D surface cut, and then moved and secured into another position for another 2D or 3D surface cut.

In an embodiment illustrated in Figure 2A, the robotic cutting system 200 comprises a first robotic arm 10a and a second robotic arms 10b. Each of the first and second robotic arms 10a, 10b comprises a first arm and a second arm portion 11a, 11b connected through a joint 12 to form a joint angle varying as a function of the movement of the first arm portion 11a relative to the second arm portion 11b. A first and a second end effector 14a, 14b are connected respectively to the first and second robotic arms 10a, 10b. The robotic system 200 is configured to move and to control a cutting element 20, which is preferably in the form of one of: a wire, a blade, a strip or a rod. In the preferred embodiment, the cutting element 20 is elastic and/or flexible. In one preferred embodiment the cutting element 20 is deformable. The cutting element 20 comprises a first end portion 20a and a second end portion 20b connected to a distal portion of respectively the first and second end effectors 14a, 14b. Similarly to the embodiment illustrated in Figure 1, a supporting element 60 may be provided onto which the block of material 50 may be attached.

The robotic system 100, 200, 300 as shown in Figure 1, Figure 2A and Figure 2B may be configured for the manufacturing of predefined objects 40 out of a block of material 50 through anticipating and controlling the deformations of the cutting element 20.

In the embodiment illustrated in Figure 1, the deformations (bending and/or twisting) of the cutting element 20 may be produced by a sequence of movements of a distal portion of the end effector 14 of the robotic arm 10 to which is connected one of the first and second end portion 20a, 20b of the cutting element 20.

In the embodiment illustrated in Figure 2A, the deformations of the cutting element 20 may be produced by a sequence of movements of a distal portion of both end effectors 14a, 14b of respective first and second robotic arms 10a, 10b to which the first and second end portions 20a, 20b of the deformable cutting element 20 are attached to.

For example, the object 40 may be cut out of the block of material 50 by the calculated motion path of the at least one robotic arm 10 moving the cutting element 20 through the block of material 50 in a predefined way according to method steps described below.

In the embodiment illustrated in Figure 2A the robotic system 200 is controlled as to move the first and second end effectors 14a and 14b to bend and/or twist and displace the deformable cutting element 20 and to position the block of material 50 with rotational and or inclinational movements, to define successive 3D cutting surfaces. The method as will be described in further detail hereafter, generates a sequence of trajectories of the first and second robotic arms 10a, 10b with the deformable cutting element 20 spanned between respective end effectors 14a,14b, whereby the cutting element is swept through the block of material 50 to create a 2D or 3D cutting surface. This sequence of deformations and displacements of the cutting element 20 defines a tool surface 30.

In the embodiment illustrated in Figure 2B the robotic cutting system 300 is controlled as to move the first, second and third end effectors 14a, 14b, 14c to bend and/or twist and displace the cutting element 20 and to position the block of material 50 with rotational and or inclinational movements, to define successive cutting surfaces. The method as will be described in further detail hereafter, generates a sequence of trajectories of the first and second robotic arms 10a, 10b with the deformable cutting element 20 spanned between respective end effectors 14a,14b, whereby the cutting element is swept through the block of material 50 to create a 2D or 3D cutting surface.

The cutting element 20 may be bended and twisted such that the deformations of the cutting element may occur in a 3D space rather than being restricted to a 2D space.

In one embodiment, after the target shape 40 is provided, a set of data is calculated corresponding to a sequence of movements of the robotic system 100 for configuring a shape of the cutting element 20. Next, the robotic system is sequentially positioned according to the set of data, thereby sweeping the cutting element 20 creating the tool surface 30, thereby cutting the block of material 50. The trajectories for each cut may be optimized such that the cutting element 20 moves and deforms in order to maximally decrease the difference between the current workpiece and the target shape.

In one embodiment, a kinematic model of the robotic system is calculated. For example, a kinematic model links the robot joint angles with the end effector's positions and orientation, and thereby the cutting element boundary conditions, e.g. positions and orientations of the cutting element ends.

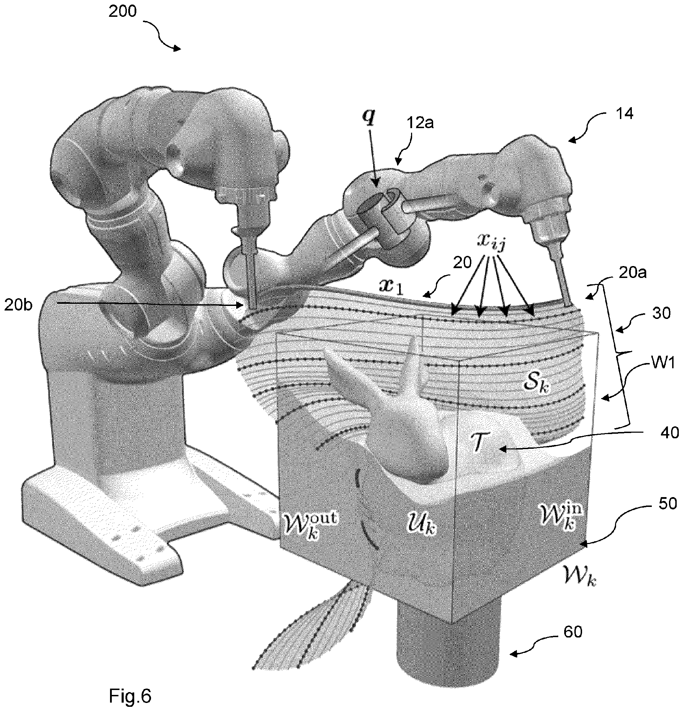

Figure 6 shows the configuration of Figure 2B in more detail indicating the notation which allows to better explain the required modelling. The surface generated by a given cut is defined as a tool surface S. Each cut removes part of the workpiece W, thereby reducing its distance to the target shape T. Starting from an initial workpiece $W_1$, the sequence of tool surfaces $S_k$ results in a sequence of workpieces $W_k$, where $W_{k-1} \supset W_k \supset T$. Each $S_k$ divides the current $W_k$ into two volumes: the one that remains, $W_k^{in}$, and the one that is removed, $W_k^{out}$. Applying $S_k$ to $W_k$ thus results in a more refined workpiece $W_{k+1} = W_k^{in}$, which is then used as input for computing $S_{k+1}$.

In the discrete setting, a tool surface is defined by a set of piecewise linear curves stacked in time, each corresponding to an equilibrium state of the cutting element. Given robot joint angles $q_i$, the corresponding equilibrium shape $x_i$ of the cutting element 20 is found by minimizing its elastic energy subject to the boundary conditions imposed by the robotic system. The joint trajectories are linearly discretized into timesteps $q_i$ where $i=1,...,n_k$. Each $q_i$ produces a different wire configuration $x_i$ defined by nodal positions $x_{ij} \in R^3$. The tool surface S is obtained by linearly interpolating between subsequent $x_i$. The proper cut is defined as a tool surface that satisfies $(x_1 \cup x_n) \cap W = \varnothing$ and $\left(\bigcup_{i=2}^{n-1} x_i\right) \cap W \neq \varnothing$, i.e., that starts and ends entirely outside of the workpiece.

In one embodiment the method comprises formulating a differentiable numerical model for computing the rest shape of the cutting element 20 for given boundary conditions. For example, the elastic rod model as described in detail in Bergou et al. (2010, Discrete Viscous Threads. In ACM SIGGRAPH 2010 Papers, ACM, New York, NY, USA, Article 116, https://doi.org/10.1145/1833349.1778853) can be used to determine the shape of the cutting element 20 as a function of the robotic system configuration. This model represents twisting and bending of the wire by defining a material frame along its piecewise linear centerline $x_i$, whose edges are equipped with additional angle variables $\alpha_i = (\alpha_{ij})$ that represent rotations of the cross section. The joint angles $q_i$ of the robot determine the position and orientation of its end-effectors which, in turn, impose boundary conditions on $x_i$. For example, these boundary conditions may be enforced using soft constraints on $x_{i1}, x_{i2}$, and the material frame normal $n_{i1}$ on one end point, and analogously for $x_{i,m-1}, x_{im}$ and $n_{i,m-1}$ on the other end point. The positions and orientations of the end effectors are computed using forward kinematics. Specifically, $x_{il}^{local}$, $l = 1,2, m - 1, m$, and $n_{il}^{local}$, $l = 1, m - 1$ may be the locations and the material frame normal of the attachment points in the end-effector's local coordinate system. The soft boundary constraint is then defined as

$$E_{bound}(x_i, \alpha_i, q_i) = \sum_{l=1,2,m-1,m} \| x_{il} - K(x_{il}^{local}, q_i) \|^2 + \sum_{l=1,m-1} \angle(n_{il}(x_i, \alpha_i), K(n_{il}^{local}, {}_i))^2$$

where $K(\cdot, \cdot)$ is the mapping from local to global coordinates, and $\angle(\cdot, \cdot)$ is the angle between two vectors.

The equilibrium shapes are determined for the wire by minimizing $E_{wire}(x_i, \alpha_i, q_i) = E_{strech}(x_i) + E_{bend}(x_i, \alpha_i) + E_{twist}(x_i, \alpha_i) + w_{bound}E_{bound}(x_i, q_i)$, where , $E_{strech}$, $E_{bend}$ and $E_{twist}$ denote energy terms corresponding to stretching, bending and twisting as defined in Bergou et al, and $w_{bound}$ is a scaling parameter for the penalty term.

The method of the present invention aims to optimize the efficiency of each cut, which requires some measure of difference between a given toolsurface $S_{k+1}$ and the target shape T that accounts for the current workpiece $W_k$. As

the tool surface covers the target shape only partially and in an approximate way, this setting bears some similarity to the problem of non-rigid partial surface registration. However, as a crucial difference to standard metrics, parts of a cut that are not sufficiently close to the target shape may receive a constant penalty, since the corresponding surface region will have to be cut again.

In designing a metric that reflects this aspect approximately, it may be for example possible to replace the standard Euclidean norm. As a starting point for such a metric, it is necessary to first establish correspondence between the target shape *T* and its partial approximation S.

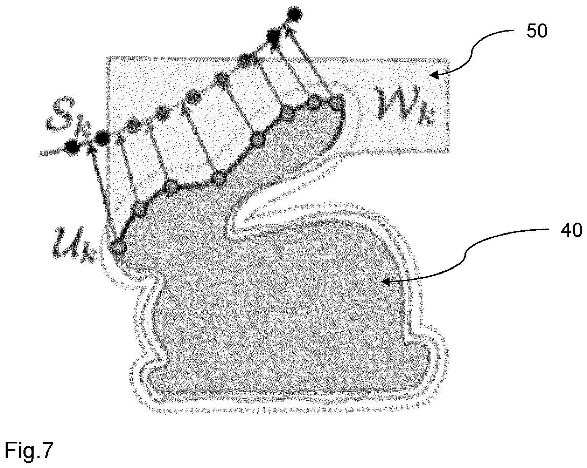

Referring to Figure 7, $U_k$ is the uncut surface part of *T* after *k* - 1 cuts. The first step is to find corresponding points between the wire nodes $x = \{x_{ij}\}$ that define the toolsurface $S_k$ and $U_k$. A straightforward approach would be to match each vertex $x_{ij}$ with its closest counterpart on $U_k$. However, since nothing prevents several wire configurations $x_i$ from taking on the same shape, this strategy runs the risk of making the toolsurface collapse to a single curve. For example, the roles may be switched and points on the target surface attract their closest counterparts on the tool surface.

The process may start by triangulating $S_k$ and uniformly sampling $U_k$. Denoting the samples on $U_k$ by $\{u_l\}_{l=1}^{n_s}$, it is possible to find for each $u_l$ its closest point on $S_k$, which is denoted by $e_l(x)$. This point can be either a vertex, or it can lie on an edge or within a triangle.

Having established correspondence, the distance between $S_k$ and $U_k$ may be defined as: $E_{dist}(x) = \sum_{l=1}^{n_s} f_p(\mathrm{d}(e_l(x), u_l)) \, A_l$ where $f_p(\cdot)$ models a norm, d $(\cdot,\cdot)$ is the Euclidean distance, and $A_l$ is the surface area pertaining to sample $u_l$. The choice for $f_p$ has a large impact on the quality of the cut. The standard $L_2$-norm may be inadequate since minimizing the average distance can lead to large parts of the cut lying outside the tolerance. Preferably, it is desirable to have as many samples $u_l$ as possible within the tolerance. The exact distance may not be important as long as it is less than a given tolerance "a". Likewise, a sample whose distance is larger than "a" may be assigned the same cost, since it has to be uncovered by another cut, irrespective of its actual distance. To remain within the continuous setting, a sequence of smoothed step-functions may be defined as:

$$H_{a\tau}(t) = \begin{pmatrix} 0 & t \leq a \\ 3(\frac{t-a}{\tau})^2 - 2(\frac{t-a}{\tau})^3 & a < t < a + \tau \\ 1 & t \geq a + \tau \end{pmatrix}.$$

As $\tau \to 0$, this function yields the desired $L_0$-like behavior when applied to the Euclidean distance, i.e.,

$$E_{dist}(x) = \sum_l H_a((e_l(x), u_l)), \quad \text{with} \quad H_a(t) = \begin{pmatrix} 0 & t < a \\ 1 & t \geq a \end{pmatrix}.$$

It should be noted that every function in the one-parameter family of the above equation is a cubic spline that smoothly transitions from 0 to 1 over a span of length $\tau$. During optimization, a continuation method may be used that gradually decrease $\tau$, thus tightening the transition region such that $H_{a\tau} \to H_a$.

In one embodiment the step of calculating the set of data corresponding to a sequence of movements of the robotic system for configuring the cutting element (20) comprises formulating at least one objective function which describes the overall goal for the tool surface (30) to conform with a surface of the target shape, and applying an optimization algorithm to minimize the objective function. In one embodiment the objective function is $E_{dist}(x)$ as defined in [0048].

The goal of the optimization is to find feasible shapes $x_i$ of the cutting element 20 that minimize the surface matching objective. In order for a given $x_i$ to be feasible, it needs to be a stable equilibrium configuration with respect to the boundary conditions imposed by the robot configuration $q_i$, i.e.

$$G(x_i, \alpha_i, q_i) := \frac{\partial}{\partial y_i} E_{\mathrm{wire}}(y_i, q_i) = 0$$

and

$$\mathrm{H}_{\mathrm{wire}}(\boldsymbol{x}_i, \boldsymbol{\alpha}_i, \boldsymbol{q}_i) := \frac{\partial^2}{\partial \boldsymbol{y}_i^2} E_{\mathrm{wire}}(\boldsymbol{y}_i, \boldsymbol{q}_i) > 0,$$

where position and angle variables are summarized as $y_i = [\mathrm{x}_i^T, \alpha_i^T]^T$. With these constraints introduced, the optimization problem can now be formulated as:

$$\min_{\boldsymbol{q}, \boldsymbol{y}} \quad O(\boldsymbol{q}, \boldsymbol{y}) = E_{\mathrm{dist}}(\boldsymbol{y}) + E_{\mathrm{reg}}(\boldsymbol{y}, \boldsymbol{q}),$$
$$\text{s.t.} \quad G(\boldsymbol{y}_i, \boldsymbol{q}_i) = 0, \forall \boldsymbol{y}_i, \boldsymbol{q}_i$$
$$\mathrm{H}_{\mathrm{wire}}(\boldsymbol{y}_i, \boldsymbol{q}_i) > 0, \forall \boldsymbol{y}_i, \boldsymbol{q}_i$$

where $E_{reg}(y,q)$ is a regularization term, and $y = (y_i)$. The first of the above expressions asks for stationarity, which is a necessary but not sufficient condition for stability. The second condition requires the Hessian to be positive definite, thus restricting feasible $y_i$ to stable local minima.

The challenge of solving the optimization problem stems mainly from the highly non-linear relationship between the robot pose and the equilibrium shape of the cutting element 20. For example, the implicit function theorem to eliminate the constraints and instead solve the unconstrained problem may be used.

$$\min_{\boldsymbol{q}} \quad O(\boldsymbol{y}(\boldsymbol{q}), \boldsymbol{q})$$

The only variables of this problem are the robot configurations q, which implicitly determine the cutting element configurations. The derivative of the objective function $O$ is therefore:

$$\frac{\mathrm{d}O}{\mathrm{d}\boldsymbol{q}} = \frac{\partial O}{\partial \boldsymbol{y}} \frac{\mathrm{d}\boldsymbol{y}}{\mathrm{d}\boldsymbol{q}} + \frac{\partial O}{\partial \boldsymbol{q}}$$

The sensitivity analysis may be used to analytically compute dy/dq as:

$$\mathrm{S} := \frac{\mathrm{d}\boldsymbol{y}}{\mathrm{d}\boldsymbol{q}} = -\left(\frac{\partial G}{\partial \boldsymbol{y}}\right)^{-1} \frac{\partial G}{\partial \boldsymbol{q}}$$

and a generalized Gauss-Newton Hessian approximation of $O,$

$$\mathrm{H} = \mathrm{S}^T \frac{\partial^2 O}{\partial \boldsymbol{y}^2} \mathrm{S} + 2\mathrm{S}^T \frac{\partial^2 O}{\partial \boldsymbol{y} \partial \boldsymbol{q}} + \frac{\partial^2 O}{\partial \boldsymbol{q}^2}$$

To minimize the objective, these derivatives may be used within a standard Quasi-Newton method augmented with line search. For each evaluation of $O(y(q), q)$ and its derivatives, y(q) may be computed by solving a separate minimization problem. While this yields an equilibrium configuration for every admissible robot state, not all equilibria are equally desirable. For example, the equilibrium states for the cutting element may be calculated using Newton's method with Levenberg-Marquardt-type regularization. However, to ensure that the wire is indeed stable, the minimization strategy may be adapted as follows: whenever the algorithm has converged to an equilibrium point, the test is made to check whether the Hessian is indefinite. If so, the solution is perturbed in the direction of the eigenvector associated with the most negative eigenvalue and proceed with the minimization. It should be stressed that the algorithm cannot ascend back to the pre-perturbation state; thanks to its line search and regularization strategies, it is forced to descend toward a stable local minimum.

To achieve reliable and accurate cutting, two more considerations regarding the equilibrium state of the cutting element play an important role: its stability with respect to external disturbances, and its sensitivity with respect to inaccuracies in the boundary conditions induced by the robotic system. The first aspect can be quantified by considering the smallest eigenvalue of the Hessian, $\lambda_{min}(H_{wire})$, which represents the resistance of the system to external forces in its weakest direction. Similarly, the sensitivity matrix S expresses how deviations of the robot pose translate into changes in the cutting element shape, and its largest singular value $\sigma_{max}(S)$ quantifies the worst possible amplification of such inaccuracies.

A strategy for avoiding these problems may be to impose bounds of the form $\lambda_{min} > \alpha_\lambda$ and $\sigma_{max} < a_\sigma$ that are enforced as part of the optimization problem. However, directly applying these bounds would require tracking eigenvalues and their derivatives which is computationally expensive and numerically unstable. In one embodiment alternative characteristics of the wire state that allows to identify non-robust and too-sensitive configurations in an efficient way is used. Such an attribute may be the angle spanned by the tangents of the wire ends: $\gamma_i = \angle(x_{i,2} - x_{i,1}, x_{i,m-1} - x_{i,m})$. Considering the constraints of our particular problem, a bound $a_\gamma$ can be found such that

$$\lambda_{min}(\mathrm{y}) > a_\lambda, \ \sigma_{max}(\mathrm{y}) < a_\sigma \quad \forall y \in \left\{ \ y \mid \gamma_i > a_\gamma \right\}$$

for reasonable choices of bounds $a_\lambda$ and $a_\sigma$. The cutting element configurations is considered as robust if the tangents at the cutting element's ends are sufficiently non-parallel. In one embodiment an objective is constructed which enforces cutting element states that are robust with respect to external forces and inaccuracies in the robot's pose.

In addition to surface matching and wire stability, one embodiment comprises inclusion of several other objective functions in the formulation that promote smooth solutions, prevent collisions between robot and workpiece, enforce workspace constraints, and safeguard against plastic deformations of the cutting element. All of these objectives are added to $E_{reg}(x,y)$ in the optimization problem described above.

The optimal path planning may be cast as an unconstrained minimization problem with judiciously designed objectives. Nevertheless, several of these objectives are strongly nonlinear and non-convex, which can lead to ill-conditioning and other numerical problems that make robust optimization challenging. In particular, it may be difficult to select parameters such as the coefficients for distance objective and constraint penalties: too aggressive values can attract the solver to undesirable local minima, while too conservative values lead to less accurate surface approximation and constraint satisfaction. Instead, a continuation strategy that adjusts these coefficients, primarily the transition length $\tau$ of the distance function based on progress. Starting with conservative choices, tightness may be gradually increased whenever progress-as measured by the difference $\rho_j = O_j - O_{j+1}$ in objective values between subsequent iterations falls below a given threshold $\rho_{min}$, which is the only remaining parameter in this continuation method. Advantageously, this strategy allows to reliably converge to good final results even for far off initializations.

The optimization algorithm described above may be integrated in a sequential planning approach that, given a rough path as initialization, maximizes the efficiency of each cut. This initialization is generated from a set of simple rules and heuristics, allowing advantageously for a fully automatic computation of the entire cutting sequence without any need for user input. In one embodiment, initializations can also be defined interactively by the user, offering a means of guiding the length of a cut and its general placement. These two approaches are described as follows

In one embodiment the cut is automatically initialized. Each cut is initialized based on an automatically generated offset curve on the target shape. This offset curve is created by intersecting the target shape with a cutting plane whose orientation is chosen at random. After offsetting and resampling, each point on the curve is assigned a score reflecting their position with respect to the uncut regions of the target surface. A set of candidate curves is created by sampling cutting planes with different orientations and select the one that maximize the sum of per-point scores.

In yet another embodiment the cut is initialized by a user. The system also offers two ways for manually guiding the aesthetics of the cut surface. First, the user may provide the initialization path for each cut and, if desired, the user may prescribe the orientation of the workpiece. In this way, the user can effectively control the general region in which a cut will be made as well as its approximate length. Second, the user may restrict the optimization to consider only sub-regions of the target surface for matching, thus narrowing down the placement of the cut.

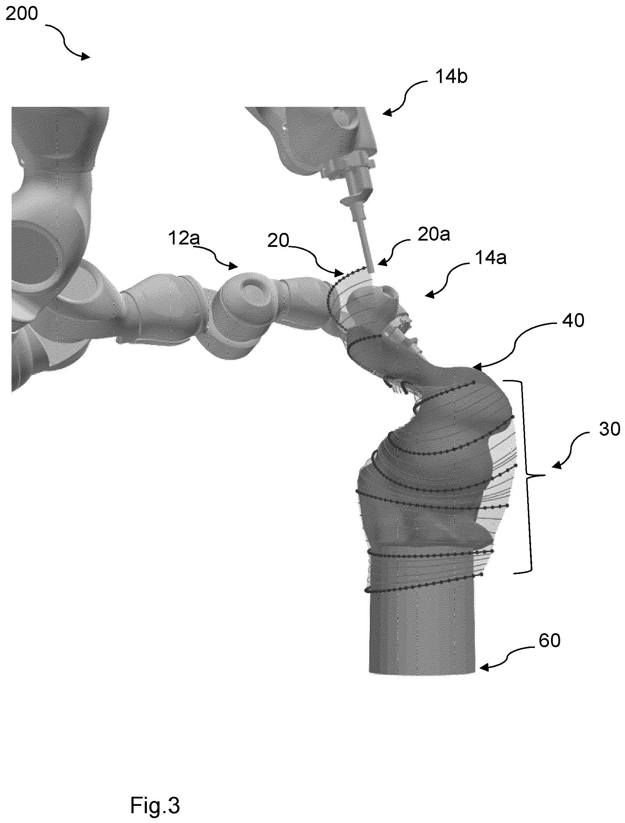

One example of results of the optimization process of one cut is shown on Figure 3 where a bunny shaped object is fabricated. The relatively thin, but far protruding ears are particularly challenging as they limit the accessibility of the neck region. The method according to the invention nevertheless produces a visually pleasing rendition of this model with good approximation accuracy.

In one embodiment, once the trajectories for all cuts have been computed, they are transferred to the robotic system for the execution. Before a trajectory is transmitted, the duration between two subsequent robot poses may be set such that the maximum cutting velocity of the cutting element equals a target velocity value. In one embodiment the velocity of the cutting element is 2 mm/s. In between cuts, the user may need to reorient the workpiece to match the orientation specified in the application. In one embodiment, excess material is removed after each cut to advantageously provide more room for the robot arms to move.

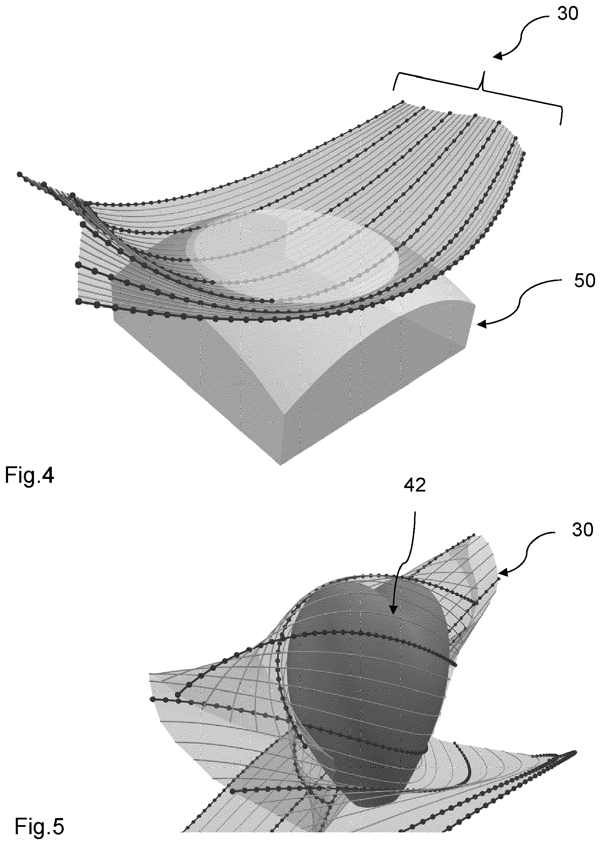

The method of the present invention may advantageously generate trajectories for the robot arms where the wire curvature is adapted to the target surface while sweeping the wire, carving out doubly curved surfaces with a single cut. Figure 4 shows an example of single cut manufacturing of the inside surface of a bowl-shaped object. Another example is shown in Figure 5. In this example the complicated heart-shaped object 42 is manufactured after 12 cuts.

One of the goals of the optimization procedure is to achieve a final shape that approximates the target up to a user-defined tolerance. This can be achieved with one or several cuts depending also on the complexity of the object. This tolerance induces a symmetric band around the target shape, and the relevant objective functions are adjusted such that they force the cut surface to lie within this band. During optimization, the lower bound of the tolerance is of particular importance and it is preferably not violated since too deep cuts cannot be undone. For this reason, the lower bound may be enforced with a unilateral penalty function. The upper bound, on the other hand, does not need to be enforced, since any excess material can be removed by subsequent cuts.

The method as described offers many advantages over the known methods. In one embodiment it allows for efficient cutting of a broad space of shapes; achieving to resolve three tightly coupled sub-problems in an unified ma: 1) modelling the way in which the shape of the cutting element and the surface it sweeps are governed by the robot's motions; 2) approximating a target shape through a sequence of surfaces swept by the cutting element; and 3) generating collision-free motion trajectories that enable the robot to create desired sweeps with the cutting element.

In one embodiment the linear systems as defined previously may be solved use Eigen libraries for matrix algebra. Other libraries for closest point searches can be for example those for spatial acceleration structures. The simulation calculations may be parallelized for reducing computation time and cost.

In one preferred embodiment the manufacturing method is hot-wire cutting. The trajectories and subsequent poses of the robotic arms may be adjusted to comply with a target velocity of the cutting element 20. The velocity may be a function of the temperature of the cutting element and the melting point of the block of material. The optimal condition is the melting of the material before contact of the cutting element 20 with the block of material 50. In one preferred embodiment, a robot with two arms having a working range of about 660 millimetres for each arm may be used. A cube of polystyrene material may be used as the block of material, and it may be mounted on a tripod and placed within the working range of the robotic arms. The diameter of the cutting element may be one millimetre heated to 250 degrees Celsius.

Other combinations of cutting element diameter, temperature and velocity may be considered, in accordance with the type of material to be cut. For instance, a block of ice, foam or chocolate may require a different combination of temperature and velocity of the cutting element than is required for a polystyrene block for cutting the predefined object.

**Claims**

1. A method for manufacturing objects from a block of material (50) using a cutting element (20) attached to a robotic system (100), the robotic system (100) being configured to move and to control the cutting element (20), the method comprising the steps of:

   - providing a target shape (40) of an object;
   - calculating a set of data corresponding to a sequence of movements of the robotic system for configuring the cutting element (20);
   - sequentially positioning the robotic system according to the set of data thereby sweeping the cutting element (20) creating a tool surface (30), and cutting the block of material (50);

   wherein the step of calculating the set of data comprises:

   - formulating at least one objective function which describes the overall goal for the tool surface (30) to conform with a surface of the target shape (40), and
   - applying an optimization algorithm to minimize the objective function.

2. The method according to claim 1, wherein the optimization algorithm is a gradient-based algorithm.

3. The method according to any of the preceding claims, wherein the steps of calculating the set of data and sequentially positioning the robotic system are repeated until a predefined tolerance is achieved.

4. The method according to any of the preceding claims, wherein the calculating of the set of data further comprises formulating additional objective functions related to path smoothness and/or collision avoidance and/or workspace constrains.

5. The method according to any of the preceding claims further comprising the step of formulating a differentiable numerical model of the cutting element (20) for computing the rest shape of the cutting element for given boundary conditions.

6. The method according to any of the preceding claims further comprising the step of calculating a kinematic model of the robotic system (100).

7. The method according to any of the preceding claims, wherein the block of material (50) is made of expanded polystyrene foam.

8. The method according to any of the preceding claims, wherein the cutting element (20) is one of: a wire, a rod, a blade and a strip.

9. The method according to any of the preceding claims wherein the cutting element (20) is configured to be heated.

10. The method according to any of the preceding claims wherein the cutting element (20) is elastic and/or flexible.

11. The method according to any of the preceding claims wherein the cutting of the block of material (50) is user initialized or automatically initialized.

12. A Robotic system (100) for manufacturing objects from a block of material (50), the system comprising:

    - at least one robotic arm (10) having an end effector (14a) ;
    - a cutting element (20) attached to the end effector (14a); and
    - computing means configured to control the robotic arm (10) and execute the steps of the method of any of claims 1 to 11.

13. The system according to claim 12, the robotic system further comprising a support element (70), wherein one end portion (20a) of the cutting element is attached to the support element.

14. The system according to claim 12, wherein the robotic system comprises the first robotic arm and the second robotic arm having respectively a first end effector (14a) and a second end effector (14b), and wherein end portions (20a, 20b) of the cutting element are attached to the end effectors (14a, 14b).

15. A computer readable storage medium comprising instructions, which when executed by computer, cause the computer to carry out the steps of the method of any of claims 1 to 11.

Fig.1

Fig.2

Fig.3

EP 3 900 886 A1

Fig.4

Fig.5

14

Fig.6

Fig.7

Europäisches
Patentamt
European
Patent Office
Office européen
des brevets

**EUROPEAN SEARCH REPORT**

Application Number

EP 20 17 0645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2017/157917 A1 (UNIV DANMARKS TEKNISKE) 21 September 2017 (2017-09-21) * page 1, line 1 - page 4, line 21 * * page 5, line 15 - page 11, line 36 * * figures 1, 4 * ----- | 1-15 | INV. B25J9/16 G05B19/4099 B26F3/12 B26D1/547 B26D3/00 B26D5/00 |
| A | R Rust et al.: "SPATIAL WIRE CUTTING Cooperative robotic cutting of non-ruled surface geometries for bespoke building components", Proceedings of the 21st International Conference of the Association for Computer-Aided Architectural Design Research in Asia CAADRIA 2016, 1 January 2016 (2016-01-01), pages 529-538, XP055734090, Retrieved from the Internet: URL:http://papers.cumincad.org/data/works/att/caadria2016_529 [retrieved on 2020-09-27] * the whole document * ----- | 1,6-15 | |
| | -/-- | | TECHNICAL FIELDS SEARCHED (IPC) B25J G05B B26F B26D |

The present search report has been drawn up for all claims

| Place of search | Date of completion of the search | Examiner |
|---|---|---|
| The Hague | 28 September 2020 | Orobitg Oriola, R |

EPO FORM 1503 03.82 (P04C01)

page 1 of 3

**EP 3 900 886 A1**

Europäisches Patentamt
European Patent Office
Office européen des brevets

## EUROPEAN SEARCH REPORT

Application Number

EP 20 17 0645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Romana Rust: "Spatial Wire Cutting Integrated Design, Simulation and Force-adaptive Fabrication of Double Curved Formwork Components", , 1 January 2017 (2017-01-01), pages 1-172, XP055734265, Zurich (CH) Retrieved from the Internet: URL:https://www.researchgate.net/publicati on/331063530_Spatial_Wire_Cutting_-_Integr ated_Design_Simulation_and_Force-adaptive_ Fabrication_of_Double_Curved_Formwork_Comp onents [retrieved on 2020-09-28] * abstract * * Sections 1, 2, 3.3, 4 and 5 * ----- | 1,6-15 | |
| A | PETKOV KIRIL P ET AL: "Hot-blade cutting of EPS foam for double-curved surfaces-numerical simulation and experiments", THE INTERNATIONAL JOURNAL OF ADVANCED MANUFACTURING TECHNOLOGY, SPRINGER, LONDON, vol. 93, no. 9, 4 August 2017 (2017-08-04) , pages 4253-4264, XP036370617, ISSN: 0268-3768, DOI: 10.1007/S00170-017-0807-Y [retrieved on 2017-08-04] * abstract * * Sections 1, 3, 5 * * figure 2 * ----- -/-- | 1,6-15 | TECHNICAL FIELDS SEARCHED (IPC) |

The present search report has been drawn up for all claims

| Place of search | Date of completion of the search | Examiner |
|---|---|---|
| The Hague | 28 September 2020 | Orobitg Oriola, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 17 0645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MIKLÓS BERGOU ET AL: "Discrete viscous threads", ACM SIGGRAPH 2010 PAPERS, ACM, US, 26 July 2010 (2010-07-26), pages 1-10, XP058312534, DOI: 10.1145/1833349.1778853 ISBN: 978-1-4503-0210-4 * the whole document * ----- | 5 | |

TECHNICAL FIELDS
SEARCHED (IPC)

The present search report has been drawn up for all claims

| Place of search | Date of completion of the search | Examiner |
|---|---|---|
| The Hague | 28 September 2020 | Orobitg Oriola, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
& : member of the same patent family, corresponding
document

EPO FORM 1503 03.82 (P04C01)

page 3 of 3

**EP 3 900 886 A1**

## ANNEX TO THE EUROPEAN SEARCH REPORT
## ON EUROPEAN PATENT APPLICATION NO.

EP 20 17 0645

28-09-2020

| Patent document cited in search report | Publication date | Patent family member(s) | | Publication date |
|---|---|---|---|---|
| WO 2017157917 A1 | 21-09-2017 | DK | 3429810 T3 | 17-08-2020 |
| | | EP | 3429810 A1 | 23-01-2019 |
| | | US | 2019039248 A1 | 07-02-2019 |
| | | WO | 2017157917 A1 | 21-09-2017 |

**EP 3 900 886 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3429810 A1

**Non-patent literature cited in the description**

- Discrete Viscous Threads. **BERGOU et al.** ACM SIG-GRAPH 2010 Papers. ACM, 2010